# EUROPEAN PATENT APPLICATION

(11) **EP 2 068 021 A2**
(43) Date of publication of application: **10.06.2009**
(21) Application number: 08020636.0
(22) Date of filing: 27.11.2008
(51) Int. Cl.: F16D 1/072, F01L 1/047, F16C 35/063

(54) **Shaft apparatus with bearing**

(30) Priority: 27.11.2007 JP 2007305786; 27.11.2007 JP 2007305787
(71) Applicant: JTEKT Corporation, Osaka-shi Osaka 542-8502 (JP)
(72) Inventor: Waseda, Yoshitaka, Osaka-shi Osaka 542-8502 (JP); Ohkubo, Takuya, Osaka-shi Osaka 542-8502 (JP); Okumura, Tsuyoshi, Osaka-shi Osaka 542-8502 (JP)
(74) Representative: Schaeberle, Steffen

(57) **Abstract**

Blocks (14) and inner rings (32) of rolling bearings (31) are arranged on the outer surface of a hollow shaft (12) at predetermined intervals in the axial direction thereof. The outer surface of the hollow shaft (12) is plastically deformed in its diameter enlarging direction so as to be press-fit to the inner surface of the blocks (14) and inner surface of the inner rings (32) of the rolling bearings (31). In this state, the blocks (14) and inner rings (32) of the rolling bearings (31) are fixed to the outer surface of the hollow shaft (12).

## Description

### BACKGROUND OF THE INVENTION

This invention relates to a shaft apparatus including a hollow shaft, blocks and rolling bearings, and also to a method for manufacturing the same.

As a shaft apparatus including a hollow shaft, blocks and rolling bearings, for example, there is a camshaft apparatus rotatably assembled with a cylinder head of an internal combustion engine.
Where the shaft apparatus is the camshaft apparatus, after a hollow shaft, a predetermined number of cam blocks (corresponding to the blocks) and rolling bearings each with an inner ring raceway being a part of the outer surface of the hollow shaft are individually formed, the cams and rolling bearings are fit onto the outer surface of the hollow shaft in an axial direction at predetermined intervals in a predetermined order.
Further, as disclosed in JP-A-2007-192315, there is a known camshaft apparatus having a structure in which with the predetermined number of cam blocks (corresponding to blocks) being arranged in the axial direction on the outer surface of the hollow shaft, the rolling bearings divisionally constructed are assembled from outside in the radial direction of the outer surface of the hollow shaft.

Meanwhile, at a normal temperature, when the rolling bearings each with an inner ring raceway being a part of the outer surface of the hollow shaft and the cam blocks are fit onto (pressed onto) the outer surface of the hollow shaft at predetermined intervals in the axial direction thereof, pressing scratches of the cam blocks will be generated on the outer surface of the hollow shaft, thereby deteriorating the function of the rolling bearings. For this reason, after the outer surface of the hollow shaft is surface-treated to have a desired hardness by e.g. heat treatment, by cooling fitting, the rolling bearings and cam blocks must be fit at predetermined intervals. This leads to cost increase.
Further, in JP-A-2007-192315, if the rolling bearings are divisionally constructed in order to assemble the rolling bearings from outside in the radial direction of the outer surface of the hollow shaft, manufacturing and assembling of the rolling bearings become troublesome.

### SUMMARY OF THE INVENTION

In view of the above problem, an object of this invention is to provide a shaft apparatus in which cam bodies such as blocks and inner rings of rolling bearings can be easily firmly fit to the outer surface of a hollow shaft in an axial direction thereof, thereby realizing cost reduction, and a method for manufacturing it.

In order to attain the above object, the present invention provides the following arrangements.
(1) A shaft apparatus comprising:
   a hollow shaft;
   blocks arranged on an outer surface of the hollow shaft in an axial direction at predetermined intervals;
   a rolling bearing having an inner ring arranged on the outer surface of the hollow shaft,
   wherein the blocks and the inner ring are fixed to the outer surface of the hollow shaft in a state that the outer surface of the hollow shaft is plastically deformed in a diameter enlarging direction so as to press-fit the hollow shaft to the inner surface of the blocks and an inner surface of the inner ring.
(2) The shaft apparatus according to (1), wherein serration teeth are formed on the inner surface of each of the blocks and are engaged with the outer surface of the hollow shaft.
(3) The shaft apparatus according to (1), wherein the inside diameter of the inner ring is larger than the inside diameter of the block, and the inner ring is fixed to the outer surface of the hollow shaft with a press-fitting force smaller than that for the inner surface of the blocks by an amount corresponding a difference between the inside diameter of the inner ring and the inside diameter of the block.
(4) A method of manufacturing a shaft apparatus including a hollow shaft, blocks and a rolling bearing, the method comprising:
   passing the blocks and an inner ring of the rolling bearing onto an outer surface of the hollow shaft in an axial direction at intervals; and
   pressurizing an inner surface of the hollow shaft to plastically deform the outer surface of the hollow shaft in a diameter enlarging direction thereof, such that the hollow shaft is press-fitted to an inner surface of the blocks and an inner surface of the inner ring, thereby fixing the blocks and the inner ring to the hollow shaft.
(5) The method according to (4), wherein, a molding die to be closed and opened is prepared the blocks and the inner ring passed onto the outer surface of the hollow shaft at intervals in the axial direction are set in the molding die in an opened state; and the molding die is closed, opposite ends of the outer surface of the inner ring are restrained by a part of a molding surface of the molding die, and the inner surface of the hollow shaft is pressurized to plastically deform the outer surface of the hollow shaft in the diameter enlarging direction.
(6) A shaft apparatus comprising: a shaft; a rolling bearing which includes an inner ring having a raceway and extended areas extending in the axial direction from opposite ends of the raceway, the shaft being fit into and fixed to an inner surface of the inner ring; and blocks fit to and fixed to outer surfaces of the extended areas, respectively.
(7) The shaft apparatus according to (6), wherein an inner surface of the block has a small-diameter part through which the shaft can pass and a large diameter part which is fit to the outer surface of the extended area, the small-diameter part and the large-diameter part being formed to make a level difference on the same central line, and a level-difference surface between the small-diameter part and the large-diameter part abuts on an end surface of the extended area so that the block is positioned in the axial direction.

In accordance with the arrangement (1), in a state where the blocks and inner rings of the rolling bearings are fit to the outer surface of the hollow shaft in the axial direction at a predetermined gap therebetween and arranged at predetermined intervals, the outer surface of the hollow shaft is plastically deformed in its diameter enlarging direction until it is press-fit onto the inner surface of the blocks and the inner surface of the inner rings of the rolling bearings so that the blocks and inner rings of the rolling bearings can be easily fixed onto the outer surface of the hollow shaft.
Thus, unlike the related art, necessity of press-fitting the blocks and inner rings by cooling fitting after the outer surface of the hollow shaft is surface-treated by e.g. surface treatment can be cancelled, thereby giving great effect in cost reduction.

In accordance with the arrangement (2), since the serration teeth (including spline teeth, knurling teeth, etc.) on the inner surface of the blocks are engaged in the outer surface of the hollow shaft, the slip torque of the blocks for the outer surface of the hollow shaft can be enhanced, thereby preventing the blocks from inadvertently rotating in the circumferential direction of the outer surface of the hollow shaft.

In accordance with the arrangement (3), with a press-fitting force smaller than that for the inner surface of the blocks elements, the inner rings of the rolling bearings can be fixed to the outer surface of the hollow shaft. Thus, the raceway (the outer surface) of the inner rings can be deterred from being excessively enlarged, thereby satisfactorily showing the function of the rolling bearings.

In accordance with the arrangement (4), the shaft apparatus described in (1) can be easily manufactured.

In the arrangement (5), with both ends of the outer surface of the inner rings restrained at a part of the surface of the molding die, by pressurizing the inner surface of the hollow shaft to plastically deform the outer surface of the hollow shaft in its diameter enlarging direction, while satisfactorily suppressing expansion of the raceway of the outer surface of the inner rings, the outer surface of the hollow shaft can be fixed to the inner surface of the inner rings by a required press-fitting force.

In accordance with the arrangement (6), the blocks are firmly fit to the extended areas of each the inner rings of the rolling elements and the shaft is firmly fit to the inner surface of the inner rings. In this way, the blocks and rolling elements can easily assembled on the outer surface in the axial direction of the shaft at predetermined intervals. In addition, inconvenience of generating press-in scratches on the inner ring raceway of the rolling bearings can be cancelled.
Thus, unlike the related art, necessity of successively fitting the rolling bearings and cam blocks to the outer surface in the axial direction of the shaft by cooling fitting after the outer surface of the shaft is surface-treated by e.g. surface treatment can be cancelled, thereby giving great effect in cost reduction.

In accordance with the arrangement (7), the large diameter part of the inner surface of each the blocks is firmly fit to the outer surface of the extended areas of each the inner rings to reach the position where the level-difference surface of the inner surface of the blocks abuts on the end surface of the extended areas of each the inner rings. For this reason, the blocks can be accurately arranged in the axial direction of the inner rings.

### BRIEF DESCRIPTION OF THE DRAWINGS

Fig. 1 is a longitudinal sectional view of a bearing-equipped camshaft device according to the first embodiment of this invention.
Fig. 2 is an enlarged longitudinal sectional view showing the state where cam blocks serving as blocks and needle roller bearings serving as rolling bearings are fixed on the outer surface in the axial direction thereof of a shaft of the bearing-equipped camshaft device according to the first embodiment of this invention.
Fig. 3 is a view for explaining the state immediately before inner rings are fit to the outer surface in the axial direction of the shaft after the cam blocks have been firmly fit to the extended areas of each the inner rings of the needle roller bearings in the bearing-equipped camshaft device according to the first embodiment of this invention.
Fig. 4 is a view for explaining the state immediately before the cam blocks are firmly fit to the extended areas of each the inner rings of the needle roller bearings after the inner rings have been firmly fit to the outer surface in the axial direction of the shaft in the bearing-equipped camshaft device according to the first embodiment of this invention.
Fig. 5 is an enlarged longitudinal sectional view showing the state where cam blocks and needle roller bearings are fixed on the outer surface in the axial direction of a shaft in the bearing-equipped camshaft device according to the second embodiment of this invention.
Fig. 6 is a view for explaining the state immediately before inner rings are firmly fit to the outer surface in the axial direction of the shaft after the cam blocks have been firmly fit to the extended areas of each the inner rings of the needle roller bearings in the bearing-equipped camshaft device according to the second embodiment of this invention.
Fig. 7 is a view for explaining the state immediately before the cam blocks are firmly fit to the extended areas of each the inner rings of the needle roller bearings after the inner rings have been firmly fit to the outer surface in the axial direction of the shaft in the bearing-equipped camshaft device according to the second embodiment of this invention.
Fig. 8 is an enlarged longitudinal sectional view showing the state where the cam blocks and needle roller bearings are fixed on the outer surface in the axial direction of a shaft in the bearing-equipped camshaft device according to the third embodiment of this invention.
Fig. 9 is a view for explaining the state before the inner ring of a first needle roller bearing is fit to the outer surface in the axial direction of the shaft in the bearing-equipped camshaft device according to the third embodiment of this invention.
Fig. 10 is a view for explaining the state before the inner ring of a second needle roller bearing is fit to the outer surface in the axial direction of the shaft in the bearing-equipped camshaft device according to the third embodiment of this invention.
Fig. 11 is a view for explaining the state where the inner rings of a predetermined number of needle roller bearings are fit to the outer surface in the axial direction of the shaft in the bearing-equipped camshaft device according to the third embodiment of this invention.
Fig. 12 is a longitudinal sectional view of a camshaft apparatus with a bearing according to the first embodiment of this invention.
Fig. 13 is an enlarged longitudinal sectional view showing the state where cam blocks serving as blocks and needle roller bearings serving as rolling bearing are fixed to the outer surface of a hollow shaft of the camshaft apparatus in the axial direction thereof.
Fig. 14 is a view showing the cross section taken in line III-III in Fig. 13.
Fig. 15 is a longitudinal cross sectional view showing the state where the hollow shaft, cam blocks and needle roller bearings are set in a molding die for hydraulic forming.
Fig. 16 is a longitudinal section view showing the state where a high hydraulic pressure is applied to the inner surface of the hollow shaft in the molding die for hydraulic forming thereby to enlarge the diameter of the outer surface.
Fig. 17 is a view for explaining an embodiment in which the inner surface of the hollow shaft is pressurized using a hard ball thereby to plastically deform the outer surface in a diameter enlarging direction.

### DETAILED DESCRIPTION OF PREFERRED EMBODIMENTS

Next, an explanation will be given of the best mode for carrying out the invention with reference to several embodiments.

### Embodiment 1

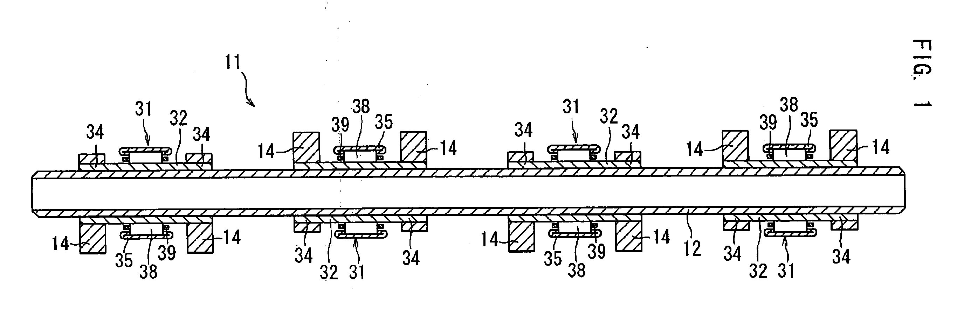

Referring to Figs. 1 to 4, the first embodiment of this invention will be explained.

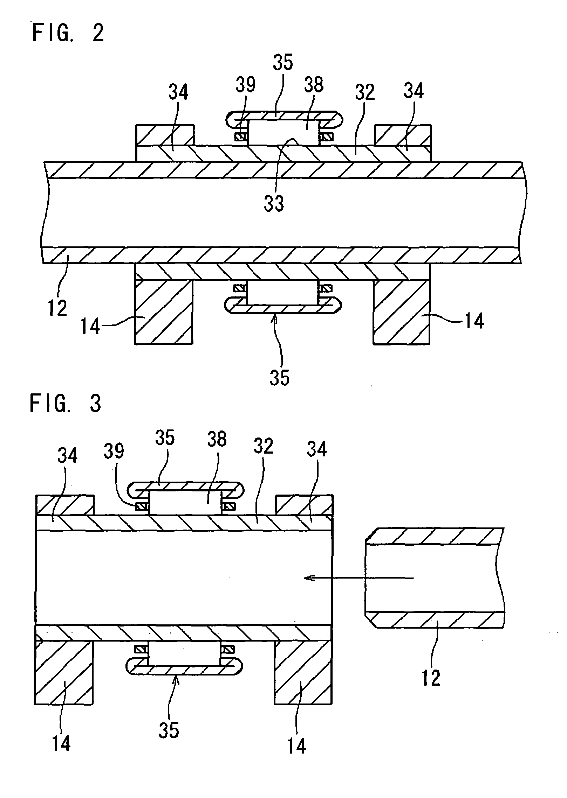

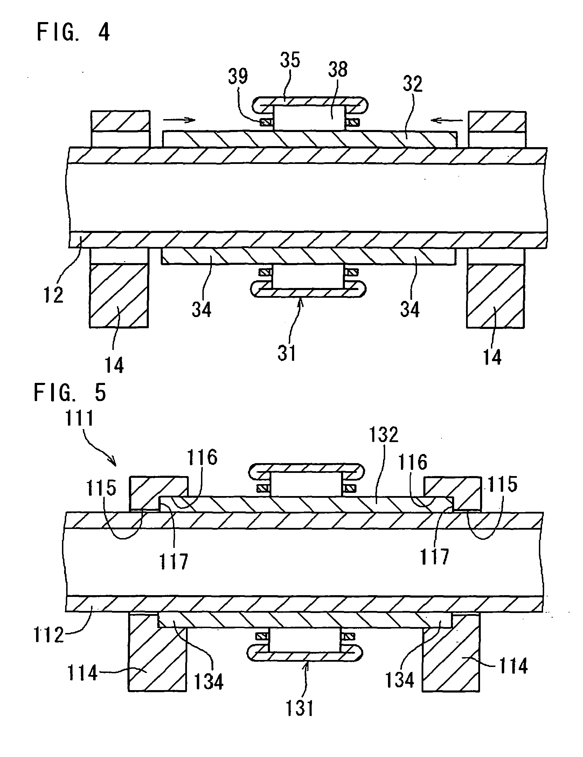

Fig. 1 is a longitudinal sectional view of a bearing-equipped camshaft device according to the first embodiment of this invention. Fig. 2 is an enlarged longitudinal sectional view showing the state where cam blocks serving as blocks and needle roller bearings serving as rolling bearings are fixed on the outer surface of a shaft of the bearing-equipped camshaft device in the axial direction thereof. Fig. 3 is a view for explaining the state immediately before inner rings are fit to the outer surface in the axial direction of the shaft after the cam blocks have been firmly fit to the extended areas of each the inner rings of the needle roller bearings. Fig. 4 is a view for explaining the state immediately before the cam blocks are firmly fit to the extended areas of each the inner rings of the needle roller bearings after the inner rings have been firmly fit to the outer surface in the axial direction of the shaft.

As shown in Fig. 1, the first embodiment proposes a case where the bearing-equipped shaft device is a camshaft device (camshaft unit) 11 assembled with the cylinder head of an internal combustion engine. The camshaft device 11 is a unit provided with a plurality of cam block 14 serving as blocks and a plurality of shell-shaped needle roller bearings 31 serving as rolling bearings in the axial direction of the outer surface of a shaft 12 which are assembled at predetermined intervals. The needle roller bearing 31 includes an inner ring 32, outer ring (shell) 35, needle rollers 38 serving as a plurality of rolling elements arranged rollably between the inner and outer rings 32, 35 and a holder 39 for holding the needle rollers 38.

As shown in Fig. 2, the inner ring 32 of the needle roller bearing 31 is formed long so as to have extended areas 34 extended respectively in the axial direction from both ends of an inner ring raceway 33 formed on the outer surface of the inner ring 32.
Onto the outer surface of both extended areas 34 of the inner ring 32, the inner surface (inner peripheral surface of an inner slot) of cam blocks 14 are fit with a predetermined interference.
Further, the needle roller bearing 31 is firmly fit, at the inner surface of its inner ring 32, at a predetermined position of the outer surface in the axial direction of the shaft 12 with a predetermined interference.
Specifically, in this first embodiment, the inside diameter of the inner ring 32 is set for the dimension smaller than the outside diameter of the shaft 12 by the extent of a press-in interference. The outside diameter of both extended areas 34 of the inner ring 32 is set for the dimension larger than the inside diameter of the cam blocks 14 by the extent of a press-in interference.

In the bearing-equipped camshaft device 11 according to the first embodiment constructed as described above, where the plurality of cam blocks 14 and plurality of needle roller bearings 31 are assembled with the outer surface in the axial direction of the shaft 12, as shown in Fig. 3, first, there are prepared a predetermined number of sets (e.g. four sets) of needle roller bearings 31 and cam blocks 14 with their inner surface (inner peripheral surface of an inner slot) firmly fit, with a predetermined interference, to the outer surface of both extended areas 34 of each the inner rings 32 of the needle roller bearings 31.
Thereafter, the predetermined number of sets of needle roller bearings 31 are successively firmly fit, at their inner rings 32, to the outer surface in the axial direction of the shaft 12 with a predetermined interference, thereby constructing the bearing-equipped camshaft device 11.
Alternatively, as shown in Fig. 4, while arranging the plurality of cam blocks 14, respectively, on both sides of the extended areas 34 of each the inner rings 32 of the plurality of needle roller bearings 31, the needle roller bearings 31 are successively firmly fit, at the inner surface of their inner rings 32, to the outer surface in the axial direction of the shaft 12 with a predetermined interference.
Thereafter, the inner surface of the cam blocks 14 (inner peripheral surface of an inner slot) is firmly fit, with a predetermined interference, to the outer surface of both extended areas 34 of each the inner rings 32 of the needle roller bearings 31, thereby easily constructing the bearing-equipped camshaft device 11.

In this way, the plurality of cam blocks 14 and needle roller bearings 31 can easily assembled on the outer surface in the axial direction of the shaft 12 at predetermined intervals; in addition, inconvenience of generating press-in scratches on the inner ring raceway of the needle roller bearings 31 can be cancelled. Thus, unlike the prior art, necessity of successively fitting the cam blocks 14 and inner rings 32 to the outer surface in the axial direction of the shaft 12 by cooling fitting after the outer surface of the shaft 12 is surface-treated by e.g. surface treatment can be cancelled, thereby giving great effect in cost reduction.

### Embodiment 2

Next, referring to Figs. 5 to 7, the second embodiment of this invention will be explained.

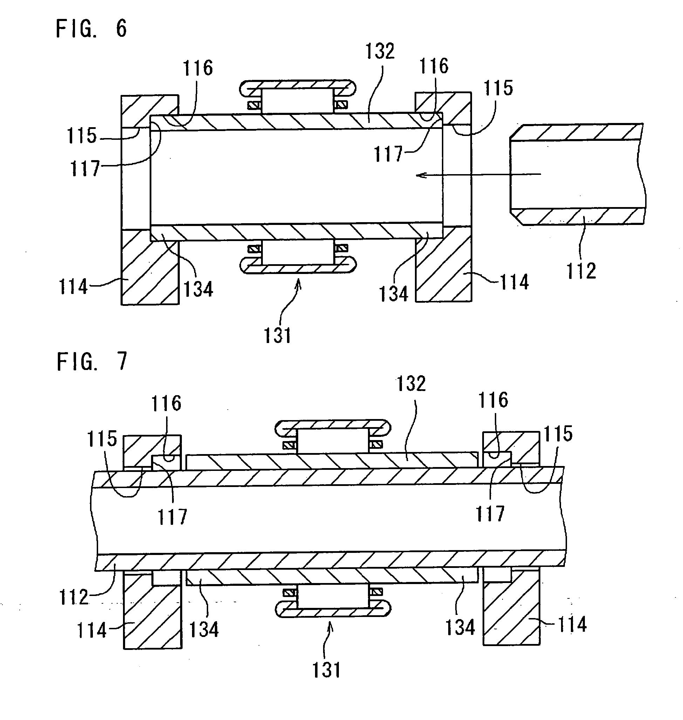

Fig. 5 is an enlarged longitudinal sectional view showing the state where cam blocks and needle roller bearings are fixed on the outer surface in the axial direction of a shaft of the bearing-equipped camshaft device according to the second embodiment of this invention. Fig. 6 is a view for explaining the state immediately before inner rings are firmly fit to the outer surface in the axial direction of the shaft after the cam blocks have been firmly fit to the extended areas of each the inner rings of the needle roller bearings. Fig. 7 is a view for explaining the state immediately before the cam blocks are firmly fit to the extended areas of each the inner rings of the needle roller bearings after the inner rings have been firmly fit to the outer surface in the axial direction of the shaft.

As shown in Fig. 6, in this second embodiment, the inner surfaces of each of a plurality of cam blocks 114 has a small-diameter part (small-diameter slot part) 115 through which a shaft 112 can pass and a large diameter part 116 (large-diameter slot part) which is fit, with a predetermined interference, to the outer surface of an extended area 134 of the inner ring 132 of a needle roller bearing 131, which are formed to make a level difference on the same central line by a level-difference surface 117 therebetween.
The level-difference surface 117 of the inner surface of the cam block 114 abuts on the end surface of the extended area 134 of the inner ring 132 of the needle roller bearing 131 so that the cam block 114 is positioned in the axial direction.
The other configurations in the second embodiment, which are the same as those of the first embodiment, will not be explained here.

In the bearing-equipped camshaft device 111 according to the second embodiment constructed as described above, where the plurality of cam blocks 114 and plurality of needle roller bearings 131 are assembled with the outer surface in the axial direction of the shaft 112 at predetermined intervals, as shown in Fig. 6, first, there are prepared a predetermined number of sets (e.g. four sets) of needle roller bearings 131 and cam blocks 114 with their large diameter part 116 of the inner surface firmly fit, with a predetermined interference, to the outer surface of both extended areas 134 of each the inner rings 132 of the needle roller bearings 131.
Thereafter, the predetermined number of sets of needle roller bearings 131 are successively firmly fit, at their inner rings 132, to the outer surface in the axial direction of the shaft 112 with a predetermined interference, thereby constructing the bearing-equipped camshaft device 111 as shown in Fig. 5.
Alternatively, as shown in Fig. 7, while arranging the plurality of cam blocks 114, respectively, on both sides of the extended areas 134 of each the inner rings 132 of the plurality of needle roller bearings 131, the needle roller bearings 131 are successively firmly fit, at the inner surface of their inner rings 132, to the outer surface in the axial direction of the shaft 112 with a predetermined interference.
Thereafter, the large diameter part 116 of the inner surface of the cam blocks 114 is firmly fit, with a predetermined interference, to the outer surface of both extended areas 134 of each the inner rings 132 of the needle roller bearings 131, thereby easily constructing the bearing-equipped camshaft device 111.

Therefore, in this second embodiment also, as in the first embodiment, inconvenience of generating press-in scratches on the inner ring raceway of the needle roller bearings 131 can be cancelled. Thus, necessity of successively firmly fitting the cam blocks 114 and inner rings 132 to the outer surface in the axial direction of the shaft 112 by cooling fitting after the outer surface of the shaft 112 is surface-treated by e.g. surface treatment can be cancelled, thereby giving great effect in cost reduction.
Particularly, in this second embodiment, the large diameter part 116 of the inner surface of the cam blocks 114 is firmly fit to the outer surface of the extended areas 134 of each the inner rings 132 to reach the position where the level-difference surface 117 of the inner surface of the cam blocks 114 abuts on the end surface of the extended areas of each the inner rings 132. For this reason, the cam blocks 114 can be accurately arranged in the axial direction of the inner rings 132.

### Embodiment 3

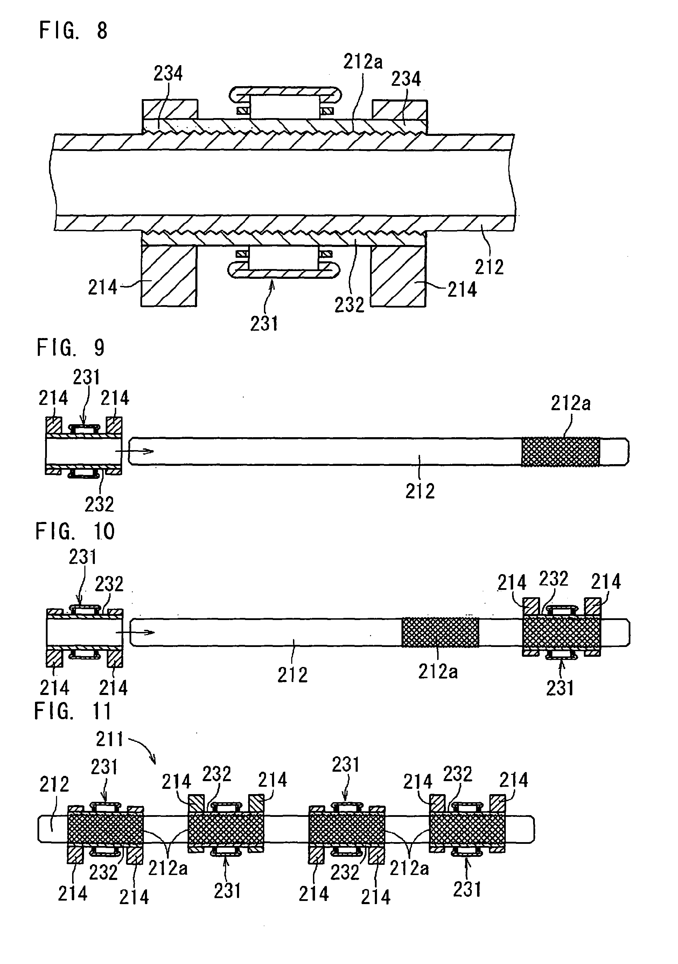

Next, referring to Figs. 8 to 11, the third embodiment of this invention will be explained. Fig. 8 is an enlarged longitudinal sectional view showing the state where the cam blocks and needle roller bearings are fixed on the outer surface in the axial direction of a shaft of the bearing-equipped camshaft device according to the third embodiment of this invention. Fig. 9 is a view for explaining the state before the inner ring of a first needle roller bearing is fit to the outer surface in the axial direction of the shaft. Fig. 10 is a view for explaining the state before the inner ring of a second needle roller bearing is fit to the outer surface in the axial direction of the shaft. Fig. 11 is a view for explaining the state where the inner rings of a predetermined number of needle roller bearings are fit to the outer surface in the axial direction of the shaft.

As shown in Fig. 8, in this third embodiment, large diameter shaft areas 212a with their outside diameter enlarged by knurling or spline machining are formed at a plurality of positions of the outer surface in the axial direction of a shaft 212 (where inner rings 232 of needle roller bearings 231 are fixed); and the inner rings 232 of the plurality of needle roller bearings 231 are firmly fit to these large diameter shaft areas 212a with a predetermined interference.
The other configurations in the third embodiment are constructed in the same manner as those of the first embodiment. Onto the outer surface of both extended areas 234 of the inner ring 232, the inner surface of cam blocks 214 are fit with a predetermined interference.

Specifically, in this third embodiment, the outside diameter of the shaft 212 is set for the dimension slightly smaller than the inside diameter of the inner ring 232 and the outside diameter of the large diameter shaft areas 212a is set for the dimension larger than the inside diameter of the inner rings 232 by the extent of a press-in interference.
As shown in Fig. 9, first, after the first large diameter area 212a for securing the inner ring 232 of the needle roller bearing 231 is formed by e.g. knurling machining at the position near the one end in the axial direction of the shaft 212, the inner ring 232 of the first needle roller bearing 231 is inserted from the other end in the axial direction of the shaft 212 in its loose-fitting state and firmly fit to the outer surface of the large diameter shaft area 212a with a predetermined interference.
Next, as shown in Fig. 10, the second large diameter shaft area 212a is formed by e.g. knurling at the position away by a predetermined distance toward the other end of the shaft 212 from the first large diameter shaft area 212a of the outer surface of the shaft 212. Thereafter, the inner ring 232 of the second needle roller bearing 231 is inserted from the other end in the axial direction of the shaft 212 in its loose-fitting state and firmly fit to the outer surface of the large diameter shaft area 212a with a predetermined interference.

By repeating the step described above, there is provided a bearing-equipped camshaft device 211 in which the plurality of cam blocks 214 and the plurality of needle roller bearings 231 are assembled with the outer surface in the axial direction of the shaft 212 as shown in Fig. 11.
Therefore, in this third embodiment also, inconvenience of generating press-in scratches on the inner ring raceway of the needle roller bearings 231 can be cancelled. Thus, necessity of successively firmly fitting the cam blocks 214 and inner rings 232 to the outer surface in the axial direction of the shaft 212 by cooling fitting after the outer surface of the shaft 212 is surface-treated by e.g. surface treatment can be cancelled, thereby giving great effect in cost reduction.
Further, in this third embodiment, alternatively, with the outside diameter of each the plurality (four in Fig. 11) of large diameter shaft areas 212a of the shaft 212 being set for the dimension slightly smaller than the inside diameter of the inner ring 232, the inner rings 232 of the plurality (four) of sets of needle roller bearings 231 may be inserted and arranged on the respective large diameter shaft areas 212a of the shaft 212. In this state, the inner surface in the hollow portion of the shaft 212 is pressurized in a direction of the outside diameter by e.g. hydraulic forming so as to enlarge the outside diameter of each the large diameter shaft areas 212a so that the inner rings 232 of the plurality of sets of bearings 231 can be fixed to the plurality of large diameter shaft areas 212a of the shaft 212.

It should be noted that this invention is not limited to the above first to third embodiments, but can be realized in various manners within a scope not departing from the spirit of this invention.
For example, in the first to third embodiments, the bearing-equipped camshaft device 11 was exemplified as the bearing-equipped shaft device. However, the bearing-equipped shaft device may be also e.g. a bearing-equipped balancer shaft device having weight elements as the blocks, or a crankshaft device.

### Embodiment 4

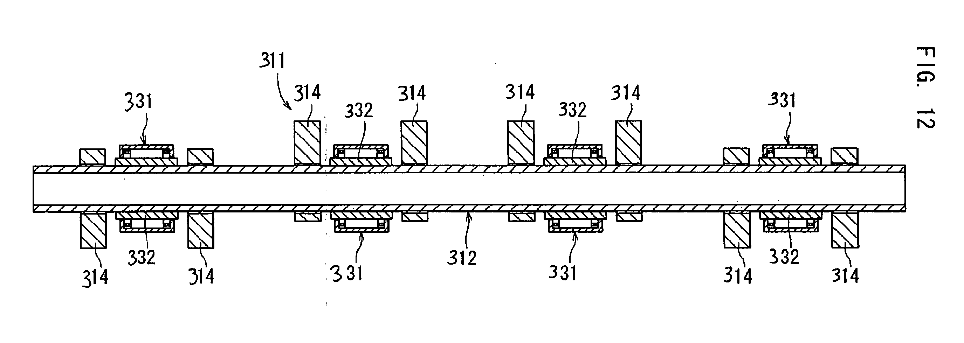

Referring to Figs. 12 to 16, the fourth embodiment of this invention will be explained.

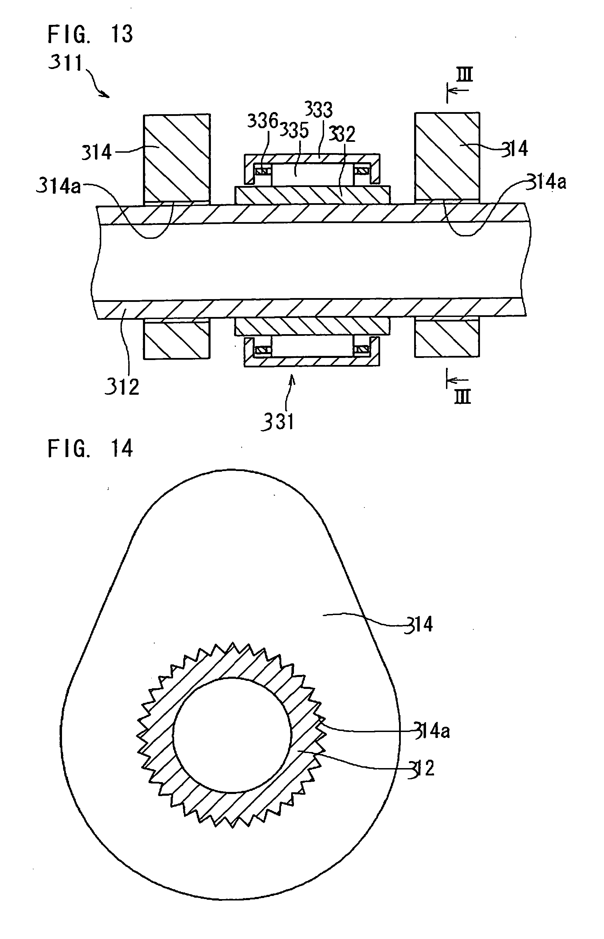

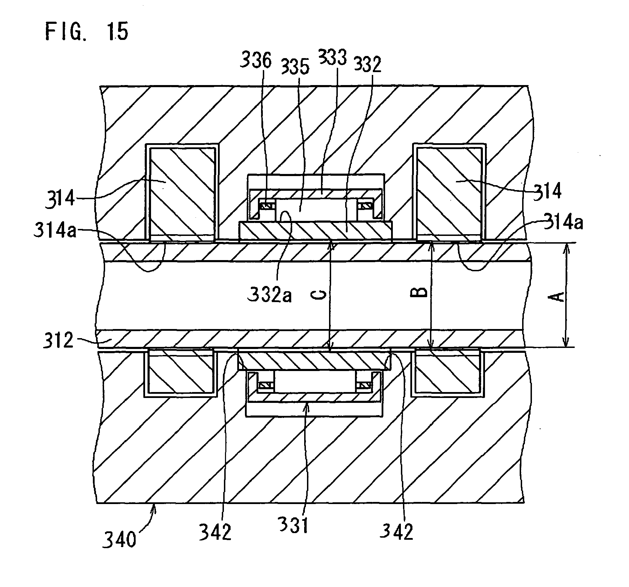

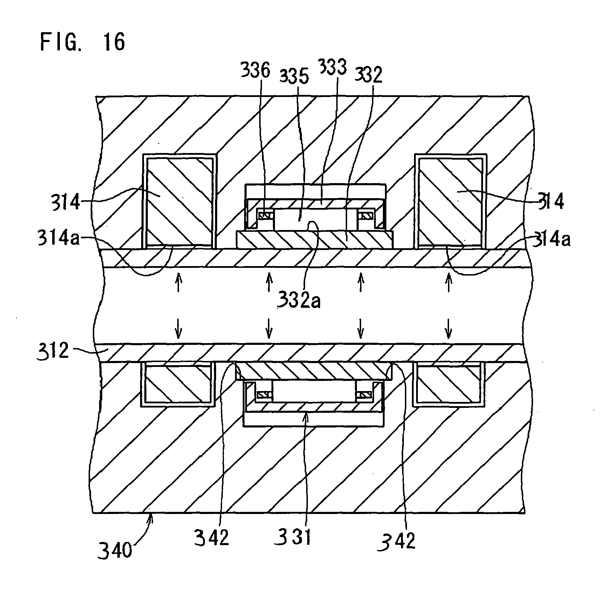

Fig. 12 is a longitudinal sectional view of a camshaft apparatus according to the fourth embodiment of this invention: Fig. 13 is an enlarged longitudinal sectional view showing the state where cam blocks and needle roller bearings are fixed to the outer surface of a hollow shaft of the camshaft apparatus in the axial direction thereof. Fig. 14 is a view showing the cross section taken in line III-III in Fig. 13. Fig. 15 is a longitudinal cross sectional view showing the state where the hollow shaft, cam blocks and needle roller bearings are set in a molding die for hydraulic forming. Fig. 16 is a longitudinal section view showing the state where a high hydraulic pressure is applied to the inner surface of the hollow shaft in the molding die for hydraulic forming thereby to enlarge the diameter of the outer surface.

As shown in Fig. 12, the fourth embodiment proposes the case where the shaft apparatus is a camshaft apparatus (camshaft unit) 311 assembled with the cylinder head of an internal combustion engine.

The camshaft apparatus 311 is a unit provided with a hollow shaft 312, a plurality of cam blocks 314 serving as blocks and a plurality of shell-shaped roller bearings 331 serving as rolling bearings, which are integrated to one another. The needle roller bearing 331 includes an inner ring 332, outer ring (shell) 333, needle rollers 335 serving as a plurality of rolling elements arranged rollably between the inner and outer rings 332, 333 and a holder 336 for holding the needle rollers 335.

As shown in Figs. 12 and 13, the plurality of cam blocks 314 and inner rings 332 of the needle roller bearings 331 are arranged on the outer surface of the hollow shaft 312 at predetermined intervals in the axial direction thereof. By plastically deforming the outer surface of the hollow shaft 312 in its diameter enlarging direction, the plurality of cam blocks 314 and inner rings 332 of the needle roller bearings 331 are fixed in a state where they are press-fit to the outer surface of the hollow shaft 312. Specifically, in this fourth embodiment, in the state before the outer surface of the hollow shaft 312 is plastically deformed in its diameter enlarging direction, as shown in Fig. 15, in order that the plurality of cam blocks 314 and inner rings 332 of the needle roller bearings 331 can be easily inserted onto the outer surface of the hollow shaft 312 in a predetermined order, the inside diameter B of the plurality of cam blocks 314 and inside diameter C of the inner rings 332 of the needle roller bearings 331 are made slightly larger than the outside diameter A of the hollow shaft 312.

Further, the inside diameter C of the inner rings 332 of the needle roller bearings 331 is made larger than the inside diameter B of the cam blocks 314.

To the extent that the inside diameter of the inner rings 332 of the needle roller bearings 331 is larger, with a press-fitting force smaller than that for the inner surface of the cam blocks 314, the inner rings 332 of the needle roller bearings 331 are fixed to the outer surface of the hollow shaft 312.

Further, in this fourth embodiment, as shown in Figs. 13 and 14, on the inner surface of the cam block 314, formed are serration teeth (including spline teeth, knurling teeth, etc.) 314a engaged in the outer surface of the hollow shaft 312.

In the camshaft apparatus 311 according to the fourth embodiment constructed described above, by plastically deforming the outer surface of the hollow shaft 312 in the diameter enlarging direction until it is press-fit onto the inner surface of the cam blocks 314 and the inner surface of the inner rings 332 of the needle roller bearings 331, the cam blocks 314 and inner rings 332 can be easily fixed onto the outer surface of the hollow shaft 312.

Thus, unlike the prior art, necessity of press-fitting the cam blocks 314 and inner rings 332 by cooling fitting after the outer surface of the hollow shaft 312 is surface-treated by e.g. surface treatment can be cancelled, thereby giving great effect in cost reduction.

Further, as shown in Fig. 14, since the serration teeth 314a on the inner surface of the cam block 314 are engaged in the outer surface of the hollow shaft 312, the slip torque of the cam block 314 for the outer surface of the hollow shaft 312 can be enhanced, thereby preventing the cam block 314 from inadvertently rotating in the circumferential direction of the outer surface of the hollow shaft 312.

Further, as shown in Fig. 15, in the state before the outer surface of the hollow shaft 312 is plastically deformed in the diameter enlarging direction, to the extent that the inside diameter C of the inner rings 332 of the needle roller bearings 331 is larger than the inside diameter B of the cam blocks 314, with a pressing force smaller than that for the inner surface of the cam blocks 314, the inner rings 332 can be fixed to the outer surface of the hollow shaft 12. Thus, the raceway 332a of the outer surface of the inner rings 332 can be deterred from excessively enlarged, thereby satisfactorily showing the function of the rolling bearings.

Next, referring to Figs. 15 and 16, an explanation will be given of a method for manufacturing the camshaft apparatus 311 according to the fourth embodiment described above. In the method for manufacturing the shaft apparatus according to the fourth embodiment, by hydraulic forming, the outer surface of the hollow shaft 312 is plastically deformed in the diameter enlarging direction until it is press-fit onto the inner surface of the cam blocks 314 and the inner surface of the inner rings 332 of the needle roller bearings 331, thereby manufacturing the camshaft apparatus 311. First, a molding die 340 of hydraulic forming to be closed and opened is prepared. Partially formed on the molded surface of the molding die 340 are inner ring holding areas 342 for restraining both ends of the outer surface of each the inner rings 332 of the needle roller bearings 331 (see Figs. 15 and 16).

On the other hand, the plurality of cam blocks 314 and inner rings 332 of the needle roller bearings 331 are passed in a loose state onto the outer surface of the hollow shaft 312 in the axial direction thereof at predetermined intervals and in a predetermined order.

In this case, in order that the plurality of cam blocks 314 and inner rings 332 of the needle roller bearings 331 can be easily inserted onto the outer surface of the hollow shaft 312 in a predetermined order, it is previously set that the inside diameter B of the plurality of cam blocks 314 and inside diameter C of the inner rings 332 of the needle roller bearings 331 are made slightly larger than the outside diameter A of the hollow shaft 312 and the inside diameter C of the inner rings 332 of the needle roller bearings 331 is made larger than the inside diameter B of the cam blocks 314.

Further, the length of the inner rings 332 of the needle roller bearings 331 in the axial direction is extended by a predetermined length from both end surfaces of the needle rollers 335 in the longitudinal direction thereof.

Next, as shown in Fig. 15, after the hollow shaft 312 provided with the plurality of cam blocks 314 and inner rings 32 of the needle roller bearings 331 is set in the molding die 340 in the opened state, the molding die 340 is closed. In this case, both ends of the extended outer surface of each the inner rings 332 are restrained by the inner ring holding areas 342.

In the state described above, the liquid (e.g. water) at a high pressure is filled into the inner surface of the hollow shaft 312 so that the inner surface of the hollow shaft 312 is pressurized to plastically deform the outer surface of the hollow shaft 312 in the diameter enlarging direction (see Fig. 16). Then, the outer surface of the hollow shaft 312 is press-fit to the inner surfaces of the plurality of cam blocks 314 and inner rings 332 of the needle roller bearings 331 so that the cam blocks 314 and inner rings 332 can be easily fixed to the outer surface of the hollow shaft 312.

Particularly, in this fourth embodiment, while satisfactorily suppressing expansion of the raceway 332a of the outer surface of each the inner rings 332 by the inner ring holding areas 342 of the molding die 340, the outer surface of the hollow shaft 312 can be fixed to the inner surface of the inner rings 332 by a required press-fitting force.

Further, both ends of the hollow shaft 312 may be pressurized in a shortening direction simultaneously when the inner surface of the hollow shaft 312 is pressurized.

It should be noted that this invention is not limited to the above fourth embodiment, but can be realized in various manners within a scope not departing from the spirit of this invention.

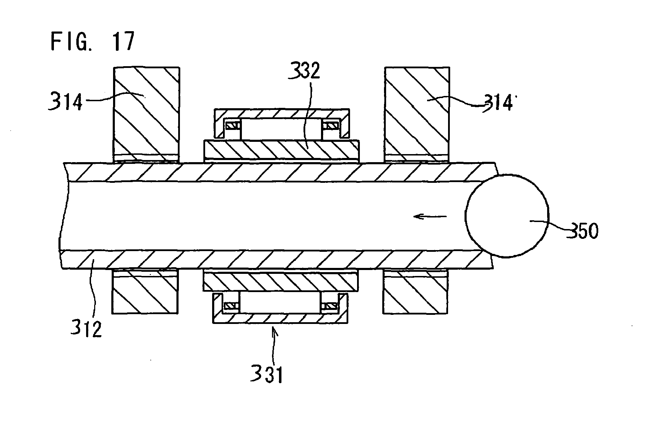

For example, in the fourth embodiment, there has been exemplified the case where by the hydraulic forming, the inner surface of the hollow shaft 312 is pressurized thereby to plastically deform the outer surface of the hollow shaft 312 in the diameter enlarging direction. However, as shown in Fig. 17, a hard ball 350 or mandrel having a diameter properly larger the inside diameter of the hollow shaft 312 may be forcibly pressed into the inner surface of the hollow shaft 312 and further advanced or advanced/retraced. In this way, the inner surface of the hollow shaft 312 is pressurized to plastically deform the outer surface of the hollow shaft 312 in the diameter enlarging direction so that the cam blocks 314 and the inner rings 332 of the needle roller bearings 331 can be fixed.

Namely, as long as the pertinent technique is a technique of pressurizing the inner surface of the hollow shaft to plastically deform the outer surface of the hollow shaft in the diameter enlarging direction, any technique may be adopted to carry out this invention.

Further, the shaft apparatus may be not only the camshaft apparatus 311 but also e.g. a balancer shaft apparatus having weight elements as the blocks or a crankshaft apparatus.

## Claims

1. A shaft apparatus comprising:
a hollow shaft;
blocks arranged on an outer surface of the hollow shaft in an axial direction at predetermined intervals;
a rolling bearing having an inner ring arranged on the outer surface of the hollow shaft,
wherein the blocks and the inner ring are fixed to the outer surface of the hollow shaft in a state that the outer surface of the hollow shaft is plastically deformed in a diameter enlarging direction so as to press-fit the hollow shaft to the inner surface of the blocks and an inner surface of the inner ring.

2. The shaft apparatus according to claim 1, wherein serration teeth are formed on the inner surface of each of the blocks and are engaged with the outer surface of the hollow shaft.

3. The shaft apparatus according to claim 1, wherein the inside diameter of the inner ring is larger than the inside diameter of the block, and the inner ring is fixed to the outer surface of the hollow shaft with a press-fitting force smaller than that for the inner surface of the blocks by an amount corresponding a difference between the inside diameter of the inner ring and the inside diameter of the block.

4. A method of manufacturing a shaft apparatus including a hollow shaft, blocks and a rolling bearing, the method comprising:
passing the blocks and an inner ring of the rolling bearing onto an outer surface of the hollow shaft in an axial direction at intervals; and
pressurizing an inner surface of the hollow shaft to plastically deform the outer surface of the hollow shaft in a diameter enlarging direction thereof, such that the hollow shaft is press-fitted to an inner surface of the blocks and an inner surface of the inner ring, thereby fixing the blocks and the inner ring to the hollow shaft.

5. The method according to claim 4, wherein, a molding die to be closed and opened is prepared the blocks and the inner ring passed onto the outer surface of the hollow shaft at intervals in the axial direction are set in the molding die in an opened state; and the molding die is closed, opposite ends of the outer surface of the inner ring are restrained by a part of a molding surface of the molding die, and the inner surface of the hollow shaft is pressurized to plastically deform the outer surface of the hollow shaft in the diameter enlarging direction.

6. A shaft apparatus comprising:
a shaft;
a rolling bearing which includes an inner ring having a raceway and extended areas extending in the axial direction from opposite ends of the raceway, the shaft being fit into and fixed to an inner surface of the inner ring; and
blocks fit to and fixed to outer surfaces of the extended areas, respectively.

7. The shaft apparatus according to claim 6, wherein an inner surface of the block has a small-diameter part through which the shaft can pass and a large diameter part which is fit to the outer surface of the extended area, the small-diameter part and the large-diameter part being formed to make a level difference on the same central line, and a level-difference surface between the small-diameter part and the large-diameter part abuts on an end surface of the extended area so that the block is positioned in the axial direction.
